# EUROPEAN PATENT APPLICATION

(11) **EP 1 050 702 A2**
(43) Date of publication of application: **08.11.2000**
(21) Application number: 00108607.3
(22) Date of filing: 20.04.2000
(51) Int. Cl.: F16K 27/04, F16K 11/078

(54) **Mixer valve**

(30) Priority: 06.05.1999 IT UD990091
(71) Applicant: Nuova Galatron S.r.l., 46043 Castiglione D/Stiviere (Mantova) (IT)
(72) Inventor: Lorenzelli, Mauro, 24100 Bergamo (IT)
(74) Representative: Petraz, Gilberto Luigi

(57) **Abstract**

Mixer valve (10) of the cartridge type, suitable to be applied in single-command taps wherein a single lever is able to command the opening and closing of the delivery, the regulation of the flow and the mixing of hot and cold water, said valve (10) comprising a containing body (11), a control lever (12) and at least a pair of platelets or disks (13, 14) arranged inside said containing body (11), a first platelet (13) being fixed and having a first aperture (15a) connected to the means to feed hot water, a second aperture (15b) connected to the means to feed cold water and a third aperture (15c) connected to the delivery mouth of the tap, said second platelet (14) being movable by activating the control lever (12) and including a through hole (16) able to selectively overlap with the apertures (15a, 15b) of the first platelet (13) so as to proportionally regulate the flows delivered through said apertures (15a, 15b) with consequent mixing of the streams of hot and cold water, the profile of the through aperture (16) of the movable platelet (14) including, in a substantially central upper position, a protrusion (20, 120, 220) configured in such a manner as to unbalance the respective streams delivered through said apertures (15a, 15b) when the movable platelet (14) is rotated, in one direction or the other, with respect to its centered position wherein the streams are balanced.

## Description

### FIELD OF THE INVENTION

This invention concerns a mixer valve as set forth in the main claim.

The mixer valve according to the invention is a cartridge-type valve and is applied in single-command taps, that is to say, in taps wherein a single lever is able to command the opening and closing of the delivery, the regulation of the flow of water delivered and the mixing of the hot and cold water.

### BACKGROUND OF THE INVENTION

The state of the art includes cartridge-type mixer valves inserted into a suitable housing provided in the body of a single-command tap and suitable to regulate the flow and temperature of delivery of a stream of water according to the commands given by the tap lever.

The mixer valve comprise, as essential elements, two platelets or disks, normally made of ceramic material and arranged substantially superimposed and coaxial with respect to each other; one is fixed in the body of the cartridge and one is movable and can be activated by the single-command lever of the tap.

The fixed platelet has at least three through apertures, one connected to means to feed the hot water, one connected to means to feed the cold water and one connected to the tap outlet mouth.

The movable platelet can be rotated, by rotating the command lever in one direction or the other, on a plane parallel that of the fixed platelet in order to vary the value of the respective transit gaps of the streams of water, hot and cold, and to regulate in this way the temperature of the mixed water to be delivered.

The movable platelet has limit positions wherein it completely closes the transit aperture of the hot water, so that only cold water can pass, or vice versa it completely closes the transit aperture of the cold water so that only hot water can pass.

The movable platelet is also able to be translated vertically with respect to the fixed platelet, by displacing the command lever upwards or downwards, to vary the flow of water delivered.

Mixer taps of this type have to satisfy some regulations which define their operating characteristics.

To be more exact, there are regulations which regulate the minimum ratio between the amount of rotational movement of the command lever and the variation in temperature of the water delivered, in order to prevent a small displacement of the lever from causing too high a variation in temperature.

According to the regulations, in order to verify this ratio the lever is displaced from one end to the other (from completely cold water to completely hot water) and back to the starting position, and the temperatures of the mixed water according to the displacement of the lever are measured.

These measurements allow to construct a graph with two curves, one of the travel out and one of the travel back, which represent the development of the temperature referred to the position of the lever.

The regulations state that, in correspondence with a defined reference interval, for example between 34°C and 42°C, called the field of comfort, the difference in temperature must correspond to a displacement of at least 10 mm for a wash-basin tap and at least 12 mm for other types of tap.

In other words, to ensure that the mixer tap is not excessively sensitive, such that it creates discomfort for the user, the regulations state that the displacement-temperature curves, at least in the field of comfort, must be as flat as possible.

A further requirement made of mixer valves is that, as far as possible, the two curves of outward and return travel must coincide, to ensure that in both directions the mixer tap is equally sensitive.

This does not normally happen, due to the irregularity in the behaviour of the streams of hot and cold water, the incomplete mixing of the streams, play between different components, wear, etc.

These requirements are extremely difficult, if not impossible, to satisfy without radically modifying the structure and the geometry of conventional mixer valves and their components; therefore, most mixer valves of this type in the state of the art cannot completely respect the requirements.

The present Applicant has devised and embodied this invention to overcome this shortcoming with a simple, functional and economical solution.

### SUMMARY OF THE INVENTION

The invention is set forth and characterized in the main claim, while the dependent claims describe other characteristics of the main embodiment.

The purpose of the invention is to achieve a cartridge-type mixer valve suitable to be inserted into the body of a single-command tap, which will have characteristics of sensitivity which meet the requirements imposed by the relative regulations.

Another purpose is to obtain the valve with a minimum design modification to the structure and geometry of conventional valves, in particular to one only of its components, so as to be able to easily adapt existing mixer taps too.

The mixer valve according to the invention conventionally consists of a cartridge-type containing body housing at least two platelets, or disks, normally made of ceramic material.

One of the two platelets is fixed to the body of the valve and has three through apertures, respectively connected to the hot water feed means, the cold water feed means and the tap outlet mouth.

The other platelet is movable with respect to the fixed platelet, has a substantially central through aperture through which the streams of water flow and is connected to the command lever of the tap.

The command lever can both oscillate from up to down and vice versa to regulate the flow of water delivered, and can also rotate around a normally vertical axis to regulate the temperature thereof.

The rotations of the command lever are transmitted to the movable platelet and the through aperture of the latter is displaced with respect to the apertures of the fixed platelet so as to vary the size of the gap and hence the percentages of hot and cold water which reach the mixing zone so as to obtain the desired delivery temperature.

According to the invention, the through aperture of the movable platelet has at least a protrusion on its profile able to create a condition of unbalance in the flow of the streams of hot and cold water fed through the respective through apertures in the fixed platelet, when said movable platelet is displaced from its substantially centered position with respect to the fixed platelet.

In other words, when the movable platelet is displaced from its centered position wherein the two streams of hot and cold water are substantially equal, to give predominance to either hot or cold water, the protrusion on the profile of the through aperture prevents the increase in one stream from corresponding exactly to the reduction in the other.

By carefully designing the protrusion, we obtain a reduction in the sensitivity of the mixer valve in that, by displacing the movable platelet in a particular direction, the stream affected by the increase in flow increases by an amount which is less than would happen without the protrusion; in this way we obtain a less accentuated variation in temperature with the same displacement of the movable platelet, that is, of the command lever.

Moreover, the protrusion also allows to obtain a greater proximity of the two curves - travel out and back- which represent the variations in temperature of the water according to the displacement of the command lever.

According to the invention, the protrusion is designed to satisfy the requirements of flow delivered for every temperature as established by the regulations.

### BRIEF DESCRIPTION OF THE DRAWINGS

The attached drawings are given as a non-restrictive example, and show some preferential forms of embodiment of the invention:
Fig. 1 is a schematic view of a cartridge-type mixer valve;
Fig. 2 is a front view of a conventional fixed platelet used in the valve shown in Fig. 1;
Figs. 3a and 3b show, respectively, the prospective view and the front view of the movable platelet according to the invention used in the valve shown in Fig. 1;
Figs. 4a and 4b show, in two positions, the operating diagram of the mixer valve which uses the movable platelet shown in Figs. 3a and 3b;
Figs. 5a and 5b show variants of Fig. 3b.

### DETAILED DESCRIPTION OF PREFERRED EMBODIMENTS

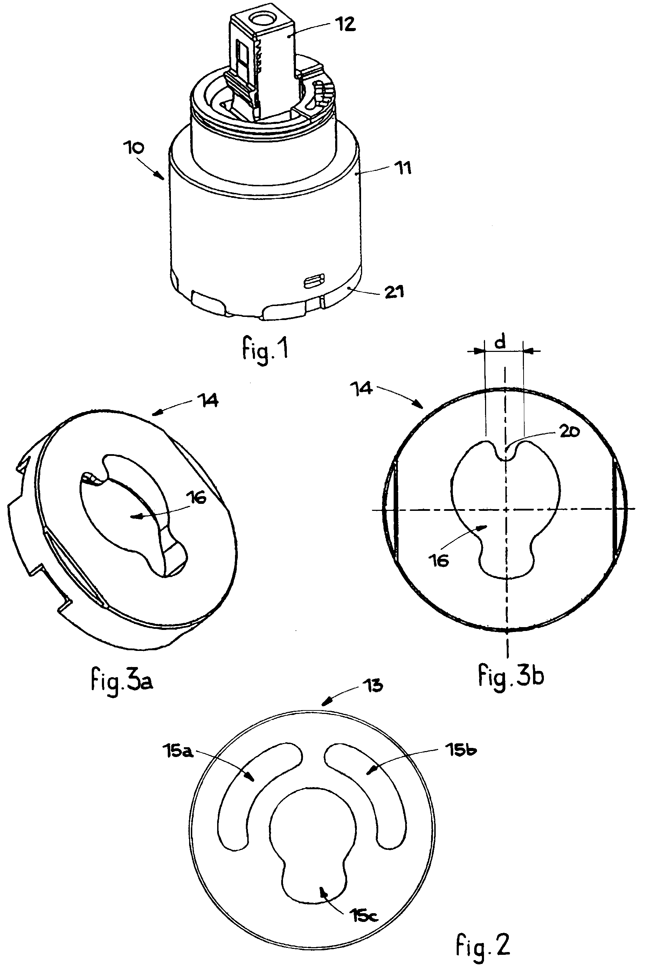

Fig. 1 shows a conventional cartridge-type mixer valve 10, suitable to be attached in a conventional manner, by means of at least a clamping nut, in the body of a single-command tap equipped with separate pipes to feed hot and cold water and a mouth to deliver the mixed water.

The mixer valve 10 consists of a control lever 12, connected to the handle of the tap, and a containing body 11, inside which the valve means, described hereafter, are housed and which regulate the flow and temperature of the water.

At the lower part, the containing body 11 has a bottom 21 able to be used to couple with auxiliary accessories such as pressure regulators, vacuum-breakers, etc.

The control lever 12 is able both to oscillate around a horizontal pin to regulate the flow, and also to rotate around a vertical axis to regulate the temperature of the water delivered.

All this is included in the state of the art and therefore is not shown in greater detail here.

The valve means of the mixer valve 10 comprise a pair of superimposed platelets, respectively 13 and 14; the platelet 13 is arranged below the platelet 14 and is fixed, while the platelet 14 is movable and can be positioned by acting on the control lever 12.

The fixed platelet 13 has two, bow-shaped through apertures, respectively 15a and 15b, counter-opposed and symmetrical, connected to means to feed the hot water and means to feed the cold water, and a further through aperture 15c, substantially central, connected to the mouth of the tap to deliver the mixed water.

The movable platelet 14 has a substantially central aperture 16 shaped to mate with the form of the through aperture 15c.

The rotational movements of the control lever 12, imparted by acting on the tap handle, are transmitted to the movable platelet 14, modifying in this way the position of the aperture 16 with respect to the apertures 15a and 15b.

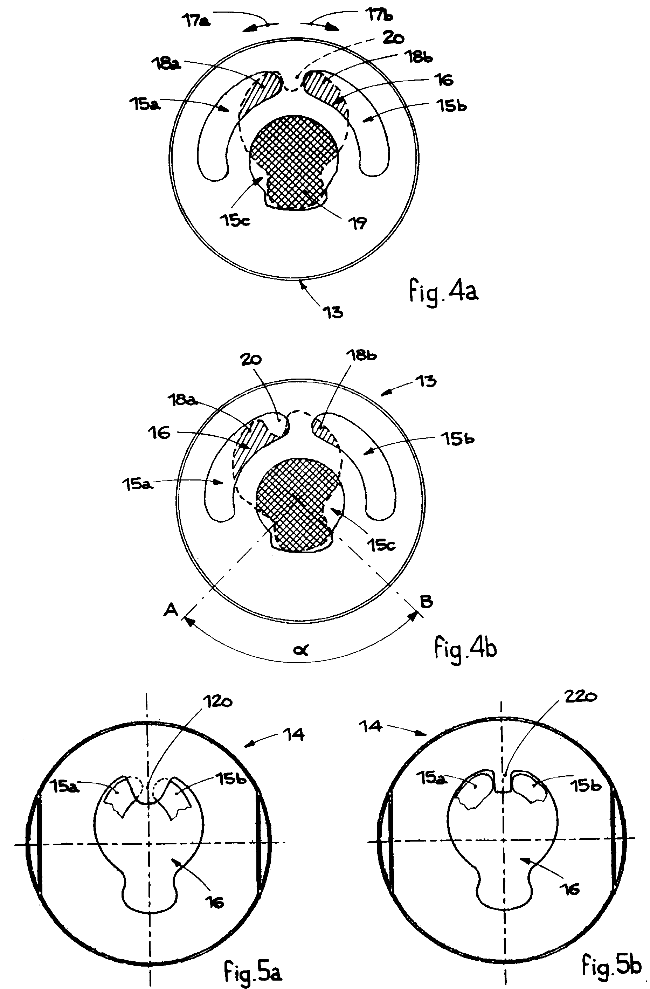

To be more exact, displacing the movable platelet 14 in one direction or the other with respect to the centered position illustrated in Fig. 4a, wherein the flows of hot and cold water are equal, the user can rotate the lever 12 to the left, in the direction of the arrow 17a, thus widening the transit gap defined by the aperture 15a and reducing the transit gap defined by the aperture 15b, until it is completely closed in its limit position.

Vice versa, by rotating the lever 12 to the right, in the direction of the arrow 17b, we have the opposite effect: the gap defined by the aperture 15a is reduced, and the gap defined by the aperture 15b is widened.

The movable platelet 14 can rotate in one direction or the other through an angle α between the limit positions A and B, wherein the tap delivers respectively only hot or only cold water.

According to the invention, in an upper, substantially central position, the profile of the through aperture 16 of the movable platelet 14 has a protrusion 20, rounded in shape and configured so as to unbalance the streams delivered through the apertures 15a and 15b when the platelet 14 is displaced with respect to its centered position as shown in Fig. 4a.

To be more exact, in the centered position as shown in Fig. 4a, the protrusion 20 does not create any unbalance in the streams inasmuch as the transit gaps of the apertures 15a and 15b (shown by the lined areas 18a and 18b) are substantially equal and therefore the flows sent to the tap through the gap indicated by the lined area 19 are equal.

When the movable platelet 14 is rotated, in the case of Fig. 4b to the left, the protrusion 20 causes the proportional increase in the water delivered through the respective gap 18a is less than what there would be without the protrusion 20, and in particular the increase is less than the correlated reduction in the water passing through the gap 18b.

Therefore, with the protrusion 20, the water delivered by the aperture 18a increases proportionally less than the water delivered through the aperture 18b diminishes, which leads to a lesser sensitivity of the mixer valve 10 and thus to a more constant temperature around the field of comfort.

Obviously, this effect is obtained in a completely identical manner by rotating the movable platelet 14 in the opposite direction.

With this invention therefore, we obtain the effect of flattening the curve of the temperature variation and the displacement of the lever 12 in the zones adjacent to the central zone of delivery of a stream consisting uniformly of hot and cold water.

The protrusion 20, in the embodiment shown in Figs. 3a, 3b, 4a and 4b has a width "d" such that, in the centered position, it is positioned astride the facing ends of the apertures 15a and 15b without interfering therewith.

According to the embodiment shown in Fig. 5a, the protrusion 120 has a width greater than the distance between the ends of the apertures 15a and 15b, so that even in the centered position it interferes with said apertures, which gives an even greater flattening of the displacement/temperature variation curves.

According to the further variant shown in Fig. 5b, the protrusion 220 has a square configuration and is located astride the ends of the gaps 15a and 15b without interfering therewith in the centered position of the movable platelet 14.

## Claims

1. Mixer valve of the cartridge type, suitable to be applied in single-command taps wherein a single lever is able to command the opening and closing of the delivery, the regulation of the flow and the mixing of hot and cold water, said valve comprising a containing body (11), a control lever (12) and at least a pair of platelets or disks (13, 14) arranged inside said containing body (11), a first platelet (13) being fixed and having a first aperture (15a) connected to the means to feed hot water, a second aperture (15b) connected to the means to feed cold water and a third aperture (15c) connected to the delivery mouth of the tap, said second platelet (14) being movable by activating the control lever (12) and including a through hole able to selectively overlap with the apertures (15a, 15b) of the first platelet (13) so as to proportionally regulate the flows delivered through said apertures (15a, 15b) with consequent mixing of the streams of hot and cold water, the mixer valve being characterized in that the profile of the through aperture (16) of the movable platelet (14) includes, in a substantially central upper position, a protrusion (20, 120, 220) configured in such a manner as to unbalance the respective streams delivered through said apertures (15a, 15b) when the movable platelet (14) is rotated, in one direction or the other, with respect to its centered position wherein the streams are balanced.

2. Mixer valve as in Claim 1, characterized in that the unbalancing of the streams delivered through the apertures (15a, 15b) is such that, during the movement of the movable platelet (14) in one direction or the other from the centered position of substantially equalised streams of hot and cold water, the stream affected by the increase in flow increases by an amount proportionally less than the stream affected by the reduction diminishes.

3. Mixer valve as in Claim 2, characterized in that said unbalancing of the streams created by the inclusion of said protrusion (20, 120, 220) is such as to create, in the zones immediately adjacent to the central delivery zone, a variation in temperature, as the position of the movable platelet (14) varies, less than would be the case if said protrusion (20, 120, 220) were not to be present.

4. Mixer valve as in Claim 1, characterized in that said protrusion (20, 220) has a width ("d") such that, in the centered position of the movable platelet (14), it is positioned substantially astride the facing ends of the two apertures (15a, 15b) without interfering therewith.

5. Mixer valve as in Claim 1, characterized in that said protrusion (120) has a width such that, in the centered position of the movable platelet (14), it interferes with the facing ends of said apertures (15a, 15b).

6. Mixer valve as in Claim 1, characterized in that the protrusion (20, 120) has a rounded development.

7. Mixer valve as in Claim 1, characterized in that the protrusion (220) has a square development.
